# EUROPÄISCHE PATENTSCHRIFT

(11) **EP 2 888 169 B1**
(45) Veröffentlichungstag und Bekanntmachung des Hinweises auf die Patenterteilung: **02.11.2016**
(21) Anmeldenummer: 13765938.9
(22) Anmeldetag: 23.08.2013
(51) Int. Cl.: B65B 1/18, B65B 1/30, H04L 12/413

(54) **FÜLLMASCHINE UND VERFAHREN ZUM BETREIBEN EINER FÜLLMASCHINE**
FILLING MACHINE AND METHOD FOR OPERATING A FILLING MACHINE
MACHINE DE REMPLISSAGE ET PROCÉDÉ D'EXPLOITATION D'UNE MACHINE DE REMPLISSAGE

(30) Priorität: 24.08.2012 DE 102012016654
(43) Veröffentlichungstag der Anmeldung: 01.07.2015
(73) Patentinhaber: Haver & Boecker OHG, 59302 Oelde (DE)
(72) Erfinder: SCHULTE, Jürgen, 59302 Oelde (DE); PETERA, Roland, 59269 Beckum (DE)
(74) Vertreter: BSB Intellectual Property Law
(86) Internationale Anmeldenummer: PCT/EP2013/002544
(87) Internationale Veröffentlichungsnummer: WO 2014/029506

(56) Entgegenhaltungen:
- EP-A2- 0 825 425
- DE-A1-102008 049 255
- JP-A- 2006 126 049

## Beschreibung

Die vorliegende Erfindung betrifft eine Füllmaschine und ein Verfahren zum Betreiben einer Füllmaschine. Die Füllmaschine dient zur Abfüllung von Produkten in Behälter. Dabei können beliebige Produkte und insbesondere fließfähige Produkte wie Schüttgüter und pastöse oder flüssige Produkte in Behälter abgefüllt werden. Als Behälter können insbesondere Säcke wie offene Säcke, Ventilsäcke, Big Bags oder Kanister, Kartons oder sonstige Behälter dienen. Die Füllmaschine umfasst mehrere Fülleinrichtungen, um gleichzeitig oder nacheinander Produkte in Behälter abzufüllen. Insbesondere ist jeder Fülleinrichtung eine Steuereinrichtung zur Steuerung zugeordnet und jede Fülleinrichtung der Füllmaschine weist eine separate Wägeeinrichtung und/oder Dosiereinrichtung auf, um den Abschaltpunkt zu bestimmen und ein definiertes Gewicht und/oder Volumen abzufüllen.

Im Stand der Technik sind z. B. rotierbare Packmaschinen bekannt geworden, mit denen Schüttgüter wie beispielsweise Zement in offene oder auch Ventilsäcke abgefüllt werden (siehe z.B. DE 10 2008 049 255 A1) . Dabei weisen solche Füllmaschinen mehrere Fülleinrichtungen auf, die auf dem Umfang der Füllmaschine verteilt angeordnet sind. Beispielsweise kann eine solche Füllmaschine 4, 6, 8, 12 oder 16 Füllstutzen auf dem Umfang verteilt angeordnet aufweisen. Bei bekannten Füllmaschinen weist regelmäßig jede Fülleinrichtung eine Steuereinrichtung mit einer Wägeeinrichtung auf, um den Füllvorgang gegebenenfalls schon während des Füllens zu steuern und um den Transport des abzufüllenden Produktes zu stoppen, wenn das angestrebte Gewicht erreicht wird. Bei einer volumetrischen Abfüllung ist eine entsprechende Dosiereinrichtung vorgesehen, mit welcher ein Volumen genau abgefüllt werden kann. Deshalb sind die einzelnen Komponenten miteinander vernetzt, um einen Daten- und Informationsaustausch zwischen den Steuereinrichtungen der Fülleinrichtungen und einer zentralen Anzeige zu ermöglichen, die z. B. neben der rotierbaren Packmaschine steht. Ein Daten- und Informationsaustausch kann auch mit anderen Anlagen erfolgen.

Zur Kommunikationsverbindung der einzelnen Komponenten werden beispielsweise Ethernetverbindungen mit einer Sterntopologie eingesetzt. Damit wird jeweils eine Punkt-zu-Punkt-Verbindung von der Steuereinrichtung eines Füllstutzens zum zentralen Netzwerkknoten ermöglicht. Jeder einzelnen Komponente steht dabei die volle Verbindungsbandbreite zur Kommunikation mit einer anderen Komponente zur Verfügung.

Derartig vernetzte Füllmaschinen funktionieren zufriedenstellend. Ein Nachteil dabei ist allerdings der erhöhte Montage- und Platzaufwand für die Sternverkabelung. Eine direkte und radial ausgerichtete sternförmige Verlegung der einzelnen Netzwerkkabel von der zentralen Drehachse aus ist aber regelmäßig nicht möglich, da in dem zentralen Bereich verschiedene Komponenten angeordnet sind, wie beispielsweise der Vorratsbehälter für das abzufüllende Produkt, sodass eine solche Verkabelung meist nicht möglich ist. Deshalb müssen entlang des Umfangs einer beispielsweise 16 Füllstutzen aufweisenden rotierenden Füllmaschine zunächst 16 unterschiedliche und auch unterschiedlich lange Netzwerkkabel zu den einzelnen Fülleinrichtungen gelegt werden. Dieses Bündel aus 16 Netzwerkkabeln erfordert einen erheblichen Flächenquerschnitt zur Durchführung desselben. Außerdem wird die Lagerhaltung vorkonfektionierter Längen aufwendiger Bei Defekt eines Kabels muss dieses zunächst herausgefunden und anschließend in passender Länge ersetzt werden, was den Wartungs- und Bevorratungsaufwand erhöht.

Es ist deshalb die Aufgabe der vorliegenden Erfindung, eine Füllmaschine zum Abfüllen von Produkten in Behälter und ein Verfahren zum Betreiben einer solchen Füllmaschine zur Verfügung zu stellen, womit eine einfachere Vernetzung und eine einfachere Wartung der einzelnen Komponenten möglich ist.

Diese Aufgabe wird gelöst durch eine Füllmaschine mit den Merkmalen des Anspruchs 1 und das Verfahren mit den Merkmalen des Anspruchs 15. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung des Ausführungsbeispiels.

Eine erfindungsgemäße Füllmaschine dient zum Abfüllen von Produkten in Behälter und weist wenigstens eine Vielzahl von Fülleinrichtungen mit jeweils wenigstens einem steuerbaren Füllorgan und wenigstens eine Mehrzahl von Steuereinrichtungen auf. Dabei kann die Anzahl der Fülleinrichtungen der Anzahl der Steuereinrichtungen entsprechen. Es ist aber auch möglich, dass für jeweils zwei oder mehr Fülleinrichtungen jeweils eine Steuereinrichtung vorgesehen ist. Jedenfalls ist jede Fülleinrichtung der Vielzahl von Fülleinrichtungen mit wenigstens einer Steuereinrichtung der Mehrzahl an Steuereinrichtungen verbunden, um die Fülleinrichtungen zu steuern. Gegebenenfalls kann auch ein Datenaustausch mit den Fülleinrichtungen erfolgen. Die Mehrzahl der Steuereinrichtungen umfasst wenigstens drei Steuereinrichtungen, von denen wenigstens eine Steuereinrichtung als schaltbare Steuereinrichtung ausgeführt ist. Jede Steuereinrichtung umfasst wenigstens zwei Ports bzw. Netzwerkanschlüsse. Die Steuereinrichtungen sind jeweils über die zwei Ports der Steuereinrichtungen zu einer Ringstruktur verbunden. Bei der wenigstens einen schaltbaren Steuereinrichtung ist wenigstens ein Port zuschaltbar und abschaltbar, um die Ringstruktur gezielt zu unterbrechen.

Die erfindungsgemäße Füllmaschine hat viele Vorteile. Die erfindungsgemäße Füllmaschine erlaubt einen einfachen Aufbau, eine einfache Montage, einen wartungsarmen Betrieb und ermöglicht einen geringen Raumbedarf für die Verbindungsleitungen der einzelnen Komponenten. Die einzelnen Verbindungsleitungen weisen vorzugsweise jeweils die gleiche Länge auf, was die Lagerhaltung vereinfacht und die Kosten senkt. Erfindungsgemäß ist wenigstens eine schaltbare Steuereinrichtung vorgesehen, bei der wenigstens ein Port bzw. Netzwerkanschluss schaltbar ist. Durch Abschalten eines Ports wird die Ringstruktur an dieser Stelle unterbrochen, sodass sich eine lineare (Netzwerk-)Struktur ergibt. Durch diese Struktur wird es ermöglicht, dass jeweils nur eine einzige Netzwerkleitung von einer Steuereinrichtung zur nächsten Steuereinrichtung geführt wird. Ein geschlossener Ring, bei dem es zu einem Stau der Netzwerkpakete binnen kürzester Zeit kommen kann, wird zuverlässig vermieden. Eine sternartige Verkabelung muss nicht vorgesehen sein.

Dadurch dass jede Steuereinrichtung über wenigstens zwei Netzwerkanschlüsse, auch Ports genannt, verfügt, werden vorzugsweise alle jeweils benachbarten Steuereinrichtungen jeweils direkt miteinander verbunden. Eine Steuereinrichtung zur Steuerung des Füllvorgangs und zur Erfassung der Wägedaten mit zwei oder mehr Ports auszurüsten, ist ein relativ geringer Aufwand, der durch den geringeren Montageaufwand, Wartungsaufwand und den geringeren Raumbedarf mehr als ausgeglichen wird.

Um aus der grundsätzlichen vorliegenden Ringstruktur eine lineare Verbindungsstruktur zu erzeugen, wird bei einer schaltbaren Steuereinrichtung durch eine Schalteinrichtung ein Port, also z. B. der erste Port oder aber der zweite Port abgeschaltet. Dadurch werden der erste und der zweite Port voneinander getrennt und die Ringstruktur wird aufgebrochen.

Vorzugsweise sind wenigstens zwei schaltbare Steuereinrichtungen mit jeweils wenigstens einem schaltbaren Port vorgesehen. Insbesondere sind von wenigstens einer schaltbaren Steuereinrichtung und insbesondere allen schaltbaren Steuereinrichtungen wenigstens zwei Ports zuschaltbar und abschaltbar. Vorzugsweise sind alle Steuereinrichtungen als schaltbare Steuereinrichtungen ausgeführt.

Vorzugsweise wird eine schaltbare Steuereinrichtung als ausgewählte Steuereinrichtung bestimmt. An der ausgewählten Steuereinrichtung wird z. B. ein bestimmter Port (Auswahlport) abgeschaltet. Dadurch ist ausgehend von einem ersten Port die ausgewählte Steuereinrichtung in eine Richtung über die anderen Steuereinrichtungen mit dem bestimmten Port (Auswahlport) verbunden. Eine direkte Verbindung des ersten Ports und des bestimmten zweiten Ports (Auswahlport) wird durch die Abschaltung des hier bestimmten Ports (Auswahlport) aufgehoben. Dadurch liegt im Prinzip eine Linearstruktur vor, da der Netzwerkverkehr sich nicht in eine Richtung beliebig fortsetzen kann, sondern an definierte Enden gelangt. In jeder Netzwerkleitung ist ein Datenverkehr in die eine Richtung und auch in die andere Richtung möglich. Das Ende wird durch den bestimmten Port, der auch als Auswahlport bezeichnet werden kann, definiert.

Dadurch, dass wenigstens drei Steuereinrichtungen vorgesehen sind, kann grundsätzlich beliebig der erste Port oder der zweite Port der schaltbaren Steuereinrichtung bzw. der ausgewählten Steuereinrichtung abgeschaltet werden. Bei mehreren schaltbaren Steuereinrichtungen kann im Betrieb der Füllmaschine auch die schaltbare Steuereinrichtung verändert werden, an welcher ein Port abgeschaltet wird.

Vorzugsweise sind deshalb wenigstens zwei schaltbare Steuereinrichtungen vorgesehen. Insbesondere sind von wenigstens einer schaltbaren Steuereinrichtung wenigstens zwei Ports separat zu- und abschaltbar. Vorzugsweise weist wenigstens ein Port wenigstens einer schaltbaren Steuereinrichtung eine Schalteinrichtung auf. Die ausgewählte Steuereinrichtung kann vorbestimmt sein, ist aber insbesondere auch im Betrieb manuell und vorzugsweise automatisch veränderbar.

Vorzugsweise ist wenigstens eine und insbesondere genau eine Master-Steuereinrichtung vorgesehen, mit welcher eine Datenverbindung zu wenigstens einer und insbesondere allen Steuereinrichtungen überprüfbar ist. Eine solche Prüfung kann beispielsweise derart erfolgen, dass von der Master-Steuereinrichtung ein Prüfsignal zu einer bestimmten Steuereinrichtung ausgesendet wird, die Antwort abgewartet und schließlich ausgewertet wird. Wird ein Ergebnis innerhalb einer vorbestimmten Zeit erhalten und entspricht dieses Ergebnis den Erwartungen, so wird ein positives Prüfergebnis erzielt. Andernfalls hat die Master-Steuereinrichtung eine fehlerhafte Datenverbindung zu der betreffenden Steuereinrichtung festgestellt.

Eine solche fehlerhafte Datenverbindung kann beispielsweise bei einem Defekt einer Fülleinrichtung und/oder einer schaltbaren oder sonstigen Steuereinrichtung oder auch eines Verbindungskabels zweier Steuereinrichtungen vorliegen. Das kann dazu führen, dass in Verbindungsrichtung gesehen hinter dieser Steuereinrichtung liegende Steuereinrichtungen für den Datenverkehr nicht mehr erreichbar sein können. Sollte die Master-Steuereinrichtung etwas Derartiges feststellen, so wird die Master-Steuereinrichtung die Netzwerkstruktur umstrukturieren, um möglichst viele Fülleinrichtungen mit einer Datenverbindung zu versorgen.

Die Master-Steuereinrichtung ist deshalb insbesondere dazu geeignet, die ausgewählte Steuereinrichtung zu einer vorherigen ausgewählten Steuereinrichtung zu deklarieren und/oder eine andere schaltbare Steuereinrichtung zu der ausgewählten Steuereinrichtung zu bestimmen, wenn die Datenverbindung zu einer der Steuereinrichtungen nicht erfolgreich war.

Besonders bevorzugt ist die Master-Steuereinrichtung dazu geeignet, die Schalteinrichtung der ausgewählten Steuereinrichtung derart umzuschalten, dass an der ausgewählten Steuereinrichtung wenigstens ein Port abgeschaltet wird, sodass keine Datenverbindung zwischen dem ersten Port und dem zweiten Port vorliegt bzw. eine Datenverbindung physikalisch oder logisch getrennt wird. Vorzugsweise wird der Port abgeschaltet, der benachbart zur Störstelle liegt. Weiterhin ist die Master-Steuereinrichtung besonders bevorzugt dazu geeignet, die Schalteinrichtung der vorherigen ausgewählten Steuereinrichtung derartig umzuschalten, dass an der vorherigen ausgewählten Steuereinrichtung ein abgeschalteter Port wieder zugeschaltet wird, sodass eine Datenverbindung zwischen dem ersten Port und dem zweiten Port physikalisch und/oder logisch vorliegt. Ein Abschalten eines Ports kann auch über ein Abmelden des Ports erfolgen, sodass dort anfallender Datenverkehr nicht mehr berücksichtigt wird.

Durch eine derartige Ausgestaltung wird im Falle eines Defekts eines Kabels, einer Steuereinrichtung und insbesondere einer schaltbaren Steuereinrichtung der Datenverkehr umstrukturiert. Die Abschaltung eines Ports und damit eine Trennung zwischen dem ersten Port und dem zweiten Port der aktuell ausgewählten Steuereinrichtung wird aufgehoben. Das führt zu keinerlei Nachteilen im Datenverkehr, da ja zuvor von der Master-Steuereinrichtung festgestellt wurde, dass an einer anderen Stelle eine Unterbrechung der Netzwerkleitung vorliegen muss, denn sonst wären ja alle Steuereinrichtungen durch die Master-Steuereinrichtung erreichbar gewesen. Dadurch, dass nun der abgeschaltete Port wieder zugeschaltet wird, wird die Verbindung zwischen dem ersten Port und dem zweiten Port der vorherigen ausgewählten Steuereinrichtung wieder hergestellt. Im Anschluss können weitere Netzwerkeinrichtungen von der Master-Steuereinrichtung erreicht werden. Das sind insbesondere die Steuereinrichtungen, die "hinter" der defekten Steuereinrichtung liegen, die nun in der Ringstruktur von der anderen Seite erreichbar sind.

Da eine solche Umschaltung der Schalteinrichtung und eine Änderung der ausgewählten Steuereinrichtung im laufenden Betrieb erfolgen kann, ist kein Stop der Füllmaschine zur Umstrukturierung der Netzwerkverbindungen nötig.

Sicherheitshalber wird an der ausgewählten schaltbaren Steuereinrichtung wenigstens ein Port abgeschaltet, sodass an der ausgewählten Steuereinrichtung die Datenverbindung zwischen dem ersten Port und dem zweiten Port getrennt ist, damit auch nach Behebung des Fehlers die Struktur der Netzwerkverbindungen immer noch eine lineare Topologie bleibt. Um aus den insgesamt in einer Ringstruktur angeordneten schaltbaren Steuereinrichtungen eine lineare Netzwerk-Topologie oder eine Bus-Topologie zur Verfügung zu stellen, muss an einer Stelle innerhalb der Ringstruktur und somit hier an einer schaltbaren Steuereinrichtung eine Abschaltung des ersten Ports und/oder des zweiten Ports erfolgen. Dadurch wird der Netzwerkring aufgehoben und eine lineare Topologie zur Verfügung gestellt. Dadurch können von einem zentralen Netzwerkanschluss an einer Steuereinrichtung ein rechter und ein linker Ast unterschiedlicher Länge entstehen.

Die Master-Steuereinrichtung ist insbesondere vorbestimmt. Vorzugsweise ist die Master-Steuereinrichtung nicht veränderbar. Vorteilhafterweise weist wenigstens die Master-Steuereinrichtung einen dritten Port bzw. einen dritten Netzwerkanschluss auf, welcher eine Verbindungsleitung nach außen zu weiteren Komponenten und insbesondere einer zentralen Anzeigeeinrichtung herstellt. Bei einer z. B. rotierbaren Füllmaschine ermöglicht eine zentrale Verarbeitungs- und/oder Anzeigeeinrichtung neben der Füllmaschine einen einfachen Überblick über die Daten der einzelnen Fülleinrichtungen und Füllprozesse, die mit den einzelnen Steuereinrichtungen ermittelt werden.

Fällt eine Steuereinrichtung aus, so kann durch Analyse des Datenverkehrs die betroffene Steuereinrichtung einfach selbsttätig ermittelt und angezeigt werden, während nach einer Umkonfigurierung des Netzwerkes alle anderen Steuereinrichtungen wieder erreichbar sind. Stellt sich so z. B. nach einem Verbindungsfehler und einer Umkonfiguration des Netzwerkes heraus, dass anschließend wieder alle Steuereinrichtungen erreichbar sind, so muss das Verbindungskabel an der Störstelle defekt sein. Ist überhaupt keine Steuereinrichtung erreichbar, so ist die Master-Steuereinrichtung an sich oder aber die Verbindungsleitung (Verbindungskabel) dorthin defekt. Das bedeutet, dass in allen Störfällen die defekte Komponente sofort selbsttätig ermittelt und angezeigt wird. Dadurch, dass die Master-Steuereinrichtung immer klar definiert ist und sich auch bei Defekten innerhalb des Netzwerkes nicht ändert, wird ein besonders einfacher Aufbau und eine besonders einfache Wartbarkeit ermöglicht. Jeder Datenverbindungsdefekt kann selbsttätig lokalisiert werden. Dadurch werden Stillstandzeiten der Füllmaschine erheblich reduziert, da der Fehler schon bei Beginn der Wartung feststeht.

Die Master-Steuereinrichtung kann eine Prüfeinrichtung aufweisen. Die Prüfeinrichtung kann zum Senden von Prüfsignalen und/oder Empfangen von Prüfsignalen und/oder zum Auswerten von Prüfsignalen dienen.

Es ist bevorzugt, dass der Master-Steuereinrichtung Informationen über alle angeschlossenen Steuereinrichtungen vorliegen. Dann überprüft die Master-Steuereinrichtung die Erreichbarkeit aller Steuereinrichtungen. Insbesondere überprüft die Master-Steuereinrichtung die Erreichbarkeit aller Steuereinrichtungen periodisch in gleichen oder unterschiedlichen Zeitabständen. Mit dem Prüfergebnis lässt sich auf die Anzahl und/oder die Position eventuell defekter Steuereinrichtungen schließen.

Es ist auch möglich, dass die Master-Steuereinrichtung keine Informationen über angeschlossene Steuereinrichtungen bereithält.

Dann identifiziert die Master-Steuereinrichtung bei der Prüfung die Netzwerkteilnehmer und insbesondere die Steuereinrichtungen, einmal links umlaufend und einmal rechts umlaufend. D. h., die Master-Steuereinrichtung identifiziert von dem ersten Port einer schaltbaren Steuereinrichtung aus alle verfügbaren Steuereinrichtungen, während der zweite Port abgeschaltet ist. Entsprechendes erfolgt bei abgeschaltetem ersten Port von dem zweiten Port aus. Anschließend werden beide Prüfergebnisse verglichen. Sind die Prüfergebnisse identisch, ist der Ring vollständig funktionstüchtig. Wenn nicht, kann auf wenigstens eine Störstelle und deren Position geschlossen werden.

In allen Fällen kann die Master-Steuereinrichtung bei Beginn einer Prüfung den abgeschalteten Port der ausgewählten Steuereinrichtung wieder zuschalten. Da gleichzeitig oder doch im Wesentlichen gleichzeitig, ein Port der Master-Steuereinrichtung abgeschaltet wird, wird dadurch der Ring wieder gezielt unterbrochen. Die Master-Steuereinrichtung zählt dann vorzugsweise die Anzahl der Steuereinrichtungen, die von dem ersten Port aus erreichbar sind, während der zweite Port der Master-Steuereinrichtung abgeschaltet ist. Anschließend schaltet die Master-Steuereinrichtung den ersten Port ab und den zweiten Port wieder zu und zählt dann die Anzahl der Steuereinrichtungen, die von dem zweiten Port aus erreichbar sind, während der erste Port der Master-Steuereinrichtung abgeschaltet ist. Ist die Anzahl in beiden Fällen gleich, ist ist das Netzwerk in Ordnung und wenn nicht, liegt ein Defekt vor. Eine solche Überprüfung kann in zeitlichen Abständen periodisch durchgeführt werden. Sollten reguläre Netzwerkpakete durch das Zu- und Abschalten von Ports während der Überprüfung verloren gehen, würden sie erneut gesendet. Da die Steuereinrichtungen die Fülleinrichtungen jeweils lokal steuern, ist die Übertragung von Signalen zu einer neben der Füllmaschine stehenden Anzeige nicht besonders zeitkritisch. Außerdem ist das Datenvolumen bei der Prüfung sehr gering, da von der Master-Steuereinrichtung nur jeweils die vorhandenen Steuereinrichtungen einmal von der einen Seite (1. Port) und einmal von der anderen Seite (2. Port) erreicht werden müssen. Eine periodische Überprüfung der Netzwerkverbindungen von allen Steuereinrichtungen zu allen anderen Steuereinrichtungen ist nicht nötig. Bei 16 vorhandenen Steuereinrichtungen wird durch die zentrale Überprüfung durch die Master-Steuereinrichtung der Netzwerkverkehr zu Prüfzwecken deshalb massiv gesenkt.

In allen Fällen kann eine Überprüfung periodisch in festen oder variablen Zeitabständen von z. B. 0,1 Sekunden oder 0,5 Sekunden oder in Zeitabständen von 1 Sekunde, 1 Minute oder mehreren Sekunden oder Minuten erfolgen.

In allen Ausgestaltungen ist es möglich, dass jede Steuereinrichtung als schaltbare Steuereinrichtung ausgeführt ist.

Eine schaltbare Steuereinrichtung ist eine Steuereinrichtung, bei der wenigstens ein Port bzw. Netzwerkanschluss zuschaltbar und abschaltbar ist.

Beispielsweise können vier, sechs, acht, zwölf oder sechzehn Fülleinrichtungen vorgesehen sein, denen jeweils genau eine schaltbare Steuereinrichtung zugeordnet ist. Es ist aber auch möglich, dass für jeweils zwei Fülleinrichtungen genau eine schaltbare Steuereinrichtung vorgesehen ist. Beispielsweise können zwei oder drei Fülleinrichtungen mit nur einer schaltbaren Steuereinrichtung verbunden sein. Dies hängt von der vorgesehenen Abfüllleistung bzw. der zur Verfügung stehenden Recheneinrichtung der Steuereinrichtung ab. Möglich ist es auch, dass für eine gewisse Anzahl von Fülleinrichtungen eine nicht-schaltbare Steuereinrichtung vorgesehen ist, wobei zwei oder mehr nicht-schaltbare Steuereinrichtungen zu Blöcken zusammengefasst und beispielsweise mit einer schaltbaren Steuereinrichtung verbunden sind. Auch durch eine solche Maßnahme wird es vermieden, dass die gesamte Anzahl der Netzwerkleitungen über den Umfang der Füllmaschine verlegt werden muss.

In allen Ausgestaltungen ist es besonders bevorzugt, dass Ethernet-Netzleitungen verlegt werden. Vorzugsweise ist wenigstens eine z. B. zentrale Verarbeitungseinrichtung und/oder zentrale Anzeigeeinrichtung neben der Füllmaschine vorgesehen. Die zentrale Verarbeitungseinrichtung und/oder die Anzeigeeinrichtung ist vorzugsweise mit der Master-Steuereinrichtung verbunden, die einen dritten Port aufweist. Es ist möglich, dass alle Steuereinrichtungen wenigstens einen dritten Port aufweisen. Somit können alle Steuereinrichtungen physikalisch identisch aufgebaut sein. Lediglich auf der als Master bestimmten oder festgelegten Steuereinrichtung läuft eine spezielle "Master" Software, die auf den Steuereinrichtungen nicht erforderlich ist.

Vorteilhafterweise ist jede Fülleinrichtung mit einer Wägeeinrichtung versehen, die insbesondere während des Füllens das Gewicht erfasst. Die Signale der Wägeeinrichtung werden von der zugeordneten Steuereinrichtung erfasst und ausgewertet. Der Füllprozess wird vorzugsweise anhand der Signale der Wägeeinrichtung gesteuert. Möglich ist es auch, dass anstelle einer Wägeeinrichtung oder zusätzlich zu einer Wägeeinrichtung jede Fülleinrichtung mit einer Dosiereinrichtung zur dosierten volumetrischen Abfüllung ausgerüstet ist. Besonders bevorzugt gibt die Steuereinrichtung ein Abschaltsignal an ein Füllorgan einer Fülleinrichtung ab, wenn das vorgesehene Abfüllgewicht und/oder Abfüllvolumen erreicht ist. Die Ausgabe des Abschaltsignals kann auch kurz vor Erreichung des Abfüllgewichtes bzw. des Abfüllvolumens erfolgen, damit nach einem möglichen Nachlauf des Füllorgans das angestrebte Füllgewicht und/oder Füllvolumen möglichst genau erreicht wird.

In einem zentralen Bereich der Füllmaschine kann ein Vorratssilo oder dergleichen vorgesehen sein. Vorzugsweise ist die Füllmaschine rotierend ausgeführt. Möglich ist es auch, dass mehrere Fülleinrichtungen parallel nebeneinander an einer feststehenden Füllmaschine angeordnet sind.

Vorzugsweise weist wenigstens eine Steuereinrichtung eine Steuereinheit zur Steuerung und eine damit verbundene Netzwerkeinheit auf. Dabei sind an der Netzwerkeinheit die wenigstens zwei Ports vorgesehen. Es ist besonders bevorzugt, dass die Steuereinheit und die Netzwerkeinheit integrale Komponenten oder integrierte Einheiten einer Steuereinrichtung sind. Eine solche Ausgestaltung ist sehr vorteilhaft und kostengünstig. Es ist aber auch möglich, dass die Steuereinheit und die Netzwerkeinheit separate Komponenten sind, die über eine Datenverbindung miteinander verbunden sind. Dann kann jede Steuereinrichtung eine Steuereinheit und eine damit verbundene separate Netzwerkeinheit umfassen.

Das erfindungsgemäße Verfahren dient zum Betreiben einer Füllmaschine zum Abfüllen von Produkten in Behälter. Insbesondere ist die Füllmaschine ausgebildet, wie zuvor beschrieben. Vorzugsweise weist die Füllmaschine wenigstens eine Vielzahl von Fülleinrichtungen mit jeweils wenigstens einem steuerbaren Füllorgan und wenigstens eine Mehrzahl von Steuereinrichtungen auf. Jeder Fülleinrichtung der Vielzahl von Fülleinrichtungen ist wenigstens eine Steuereinrichtung der Mehrzahl der Steuereinrichtungen zum Steuern des Füllprozesses mit dem Füllorgan zugeordnet. Jede Fülleinrichtung ist mit wenigstens einer Steuereinrichtung verbunden, um die Fülleinrichtungen und insbesondere das Abfüllen der Produkte in Behälter zu steuern.

Die Mehrzahl der Steuereinrichtungen umfasst wenigstens drei Steuereinrichtungen, von denen wenigstens eine Steuereinrichtung als schaltbare Steuereinrichtung ausgeführt ist. Jede Steuereinrichtung umfasst wenigstens zwei Ports. Bei der wenigstens einen schaltbaren Steuereinrichtung ist wenigstens ein Port zu- und abschaltbar. Die Steuereinrichtungen sind zu einer Ringstruktur verbunden sind, wobei die Ringstruktur durch Abschalten eines Ports gezielt unterbrochen werden kann.

Auch das erfindungsgemäße Verfahren hat erhebliche Vorteile, da es einen einfachen und zu verlässigen Betrieb einer erfindungsgemäßen Füllmaschine erlaubt.

Vorzugsweise wird von einer Steuereinrichtung und insbesondere einer Master-Steuereinrichtung aus über den einen und den anderen Port periodisch versucht, die anderen Steuereinrichtungen zu erreichen, um einen Defekt zu erkennen. Bei Erkennung eines Defektes wird der abgeschaltete Port wieder zugeschaltet. Ein Defekt liegt z. B. vor, wenn die ermittelte Anzahl nicht mit der bekannten Anzahl übereinstimmt. Wenn beispielsweise 12 Steuereinrichtungen vorhanden sind und ein defektes Kabel zwischen der 4. und 5. Steuereinrichtung vorliegt, so erkennt die Master-Steuereinrichtung in eine Richtung drei und die andere Richtung acht Steuereinrichtungen. Damit ist klar, dass wahrscheinlich die Kabelverbindung zwischen der 4. und 5. Steuereinrichtung defekt ist. Ist hingegen die 5. Steuereinrichtung ausgefallen, so werden in die eine Richtung drei und die andere Richtung lediglich sieben Steuereinrichtungen erkannt.

Wenn zwei oder mehr schaltbare Steuereinrichtungen vorgesehen sind, kann eine schaltbare Steuereinrichtung als ausgewählte Steuereinrichtung bestimmt werden. An der ausgewählten Steuereinrichtung wird dann bei Bedarf ein Port zu- oder abgeschaltet. Dadurch wird eine Verbindung zwischen dem ersten und dem zweiten Port getrennt. Zur Trennung kann wenigstens eine Schalteinrichtung in oder an einer schaltbaren Steuereinrichtung vorgesehen sein.

Vorzugsweise wird eine Datenverbindung zu den Steuereinrichtungen geprüft. Insbesondere wird die Datenverbindung nach Eingabe eines entsprechenden Befehls überprüft. Vorzugsweise wird die Datenverbindung wenigstens bei jedem Start der Füllmaschine überprüft. Möglich und bevorzugt ist es auch, dass eine Überprüfung der Datenverbindung zu den einzelnen schaltbaren Steuereinrichtungen regelmäßig, in festen Abständen oder in mehr oder weniger zufälligen Abständen beispielsweise im Sekunden-, Minuten- oder Stundenrhythmus durchgeführt wird.

Insbesondere wird eine ausgewählte Steuereinrichtung als vorherige ausgewählte Steuereinrichtung gekennzeichnet, und es wird eine neue ausgewählte Steuereinrichtung bestimmt, wenn die Datenverbindung zu einer Steuereinrichtung nicht erfolgreich war.

Insbesondere wird die schaltbare Steuereinrichtung als ausgewählte Steuereinrichtung bestimmt, welche benachbart zu der Steuereinrichtung angeordnet ist, zu der die Datenverbindung nicht erfolgreich war. Das bedeutet, dass insbesondere genau die schaltbare Steuereinrichtung zur ausgewählten Steuereinrichtung bestimmt wird, die unmittelbar mit der schaltbaren Steuereinrichtung verbunden ist, zu der keine Verbindung herstellbar war.

Wird eine neue schaltbare Steuereinrichtung ausgewählt, so wird bei dieser ausgewählten Steuereinrichtung vorzugsweise wenigstens ein Port abgeschaltet, sodass die Verbindung zwischen dem ersten Port und dem zweiten Port getrennt wird. Vorzugsweise wird der Port abgeschaltet, der mit einer Datenleitung zu der nicht erreichbaren Steuereinrichtung verbunden ist. Außerdem wird bei der vorherigen ausgewählten Steuereinrichtung der abgeschaltete Port wieder zugeschaltet, wodurch eine dynamische Ethernet-Topologie mit entweder einem langen oder zwei jeweils auch unterschiedlich lang ausgeführten linearen Zweigen entsteht.

In allen Ausgestaltungen können die schaltbaren Steuereinrichtungen Ethernet-Switche umfassen, die als sogenannte gemanagte Switche (engl.: "managed switches") ausgeführt sind und integraler Bestandteil der schaltbaren Steuereinrichtungen sein können. Die Steuereinrichtungen können so ausgebildet sein, dass sie sich im Netzwerk wie Netzwerkeinrichtungen verhalten.

Weitere Vorteile der vorliegenden Erfindung ergeben sich aus dem Ausführungsbeispiel, welches im Folgenden mit Bezug auf die beiliegenden Figuren erläutert wird.

In den Figuren zeigen:
- Fig. 1: eine stark schematische Draufsicht auf eine erfindungsgemäße Füllmaschine;
- Fig. 2: ein stark schematisches Schaltbild der Steuereinrichtungen der Füllmaschine nach Fig. 1;
- Fig. 3: ein stark schematisches Schaltbild der Steuereinrichtungen einer Variante der Füllmaschine nach Fig. 1;
- Fig. 4: das Schaltbild nach Fig. 2 in einer anderen Schaltstellung; und
- Fig. 5: das Schaltbild nach Fig. 2 in einer dritten Schaltstellung.

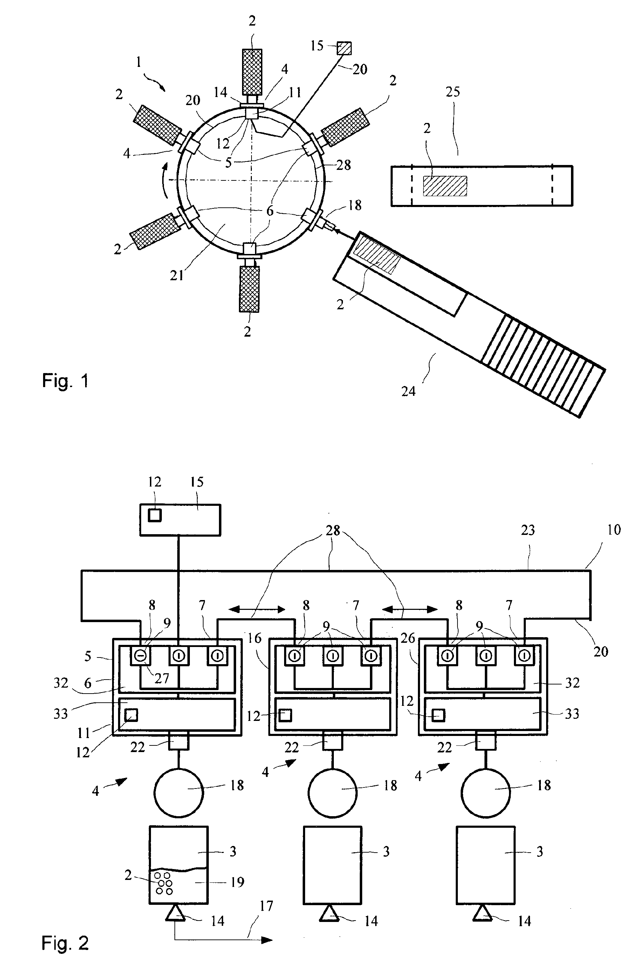

Fig. 1 zeigt eine stark schematische Draufsicht auf eine Füllmaschine 1 zum Füllen von Produkten 2 in Behälter 3. Hier ist die Füllmaschine 1 zur Abfüllung von Schüttgütern in Säcke und hier insbesondere in Ventilsäcke vorgesehen.

Die Füllmaschine 1 ist hier um eine zentrale Achse kontinuierlich rotierend ausgeführt und umfasst hier sechs über den Umfang verteilt angeordnete Fülleinrichtungen 4, die jeweils über einen Füllstutzen als Füllorgan 18 verfügen. Möglich und bevorzugt sind auch Füllmaschinen 1 mit 8, 12, 14, 16 oder mehr oder weniger Fülleinrichtungen 4.

Jede Fülleinrichtung 4 weist hier eine Steuereinrichtung 5 mit einer zugeordneten Wägeeinrichtung 14 auf. Die Wägeeinrichtungen 14 umfassen Wägezellen. Die Messdaten der Wägezellen werden von den Steuereinrichtungen 5 ausgewertet. Dabei sind die Steuereinrichtungen 5 zum Datenaustausch mit den anderen Fülleinrichtungen sowie mit einer zentralen Verabeitungs- und/oder Anzeigeeinrichtung 15 verbunden. Alle Steuereinrichtungen 5 sind hier als schaltbare Steuereinrichtung 6 ausgeführt. Es ist möglich, dass jede Steuereinrichtung einer Fülleinrichtung 4 eine eigene Steuereinheit 33 und eine eigene Netzwerkeinheit 32 aufweist, die zur lokalen Steuerung des Abfüllprozesses dient. Möglich ist es auch, dass eine Steuereinrichtung 5 die Steuerung der Abfüllprozesse an zwei (oder auch mehr) Fülleinrichtungen 4 übernimmt.

In jedem Fall sind die Steuereinrichtungen 6 der einzelnen Fülleinrichtungen 4 über Datenleitungen 20, die hier als Netzwerkleitungen 28 ausgeführt sind, über den Umfang der Füllmaschine 1 miteinander verbunden. Es ergibt sich eine Ringstruktur 10, wobei aber an hier einer einzigen Steuereinrichtung 6 die Verbindung unterbrochen ist, sodass sich insgesamt eine einästige oder zweiästige variable Linearstruktur ergibt.

Zum automatischen Aufstecken der Säcke ist hier eine Aufsteckeinrichtung 24 vorgesehen. Die gefüllten Säcke werden von einer Austrageeinrichtung 25 abtransportiert. Auf die gleiche Art können nicht nur Säcke, sondern auch sonstige Behälter mit Produkten 2 abgefüllt werden.

Figur 2 zeigt eine stark schematische Darstellung des Schaltbildes einer Variante der Füllmaschine 1 nach Figur 1. Die einzelnen Fülleinrichtungen 4 der Füllmaschine 1 verfügen über Steuereinrichtungen 5, die hier alle als schaltbare Steuereinrichtungen 6, 16 und 26 ausgeführt sind.

Jede einzelne Steuereinrichtung (5, 6, 16 und 26) verfügt über eine Steuereinheit 33 und eine Netzwerkeinheit 32. Die Steuereinheit 33 und die Netzwerkeinheit 32 können in einem gemeinsamen Gehäuse untergebracht sein oder ineinander integriert sein, können aber auch als separate Baugruppen ausgeführt sein, die zusammen zu der jeweiligen Steuereinrichtung gehören. Die Steuereinheit 33 und die Netzwerkeinheit 32 sind über Datenleitungen miteinander verbunden. Die Datenleitung kann ein Netzwerkabel oder auch eine gemeinsame Platine sein.

Jede einzelne schaltbare Steuereinrichtung 6, 16 und 26 verfügt über mindestens zwei Ports 7 und 8. Wenigstens eine schaltbare Steuereinrichtung 6 kann über eine Datenleitung mit der zentralen Anzeigeeinrichtung 15 verbunden sein. Möglich ist es auch, dass keine zentrale Datenleitung und/oder keine zentrale Anzeigeeinrichtung 15 vorgesehen sind. Der Datenaustausch erfolgt dann z. B. nur innerhalb der Ringstruktur 10.

Bei jeder schaltbaren Steuereinrichtung 6, 16 und 26 ist hier jeweils der erste Port 7 über eine Datenleitung mit dem zweiten Port 8 einer der anderen schaltbaren Steuereinrichtungen 6, 16, 26 verbunden. Das bedeutet hier, dass der erste Port 7 der schaltbaren Steuereinrichtung 6 mit dem zweiten Port 8 der schaltbaren Steuereinrichtung 16 verbunden ist. Der erste Port 7 der schaltbaren Steuereinrichtung 16 ist mit dem zweiten Port 8 der schaltbaren Steuereinrichtung 26 verbunden. Der erste Port 7 der schaltbaren Steuereinrichtung 26 ist wiederum mit dem zweiten Port 8 der schaltbaren Steuereinrichtung 6 verbunden. Grundsätzlich sind auch andere Verschaltungen möglich, bei denen eine insgesamt lineare Verbindung der Steuereinrichtungen 5 vorliegt.

In Figur 2 sind nur drei schaltbare Steuereinrichtungen 5, nämlich die Steuereinrichtungen 6, 16 und 26 dargestellt, obwohl die Füllmaschine nach Figur 1 über insgesamt sechs Fülleinrichtungen 4 verfügt. Zur Wahrung der Übersichtlichkeit sind in Figur 2 aber nur drei schaltbare Fülleinrichtungen 6, 16 und 26 abgebildet, um das Prinzip zu verdeutlichen.

Je nach Anzahl der Fülleinrichtungen 4 einer Füllmaschine 1 ist vorzugsweise eine entsprechende Anzahl von schaltbaren Steuereinrichtungen vorgesehen, sodass beispielsweise auch acht, zwölf, sechzehn oder mehr oder weniger schaltbare Steuereinrichtungen vorgesehen sein können. Jedenfalls ist wenigstens eine schaltbare Steuereinrichtung vorgesehen, die einen geschlossenen Ring verhindern kann und welche die Ringstruktur an einer Stelle bedarfsweise trennt oder wieder herstellt.

Möglich ist es auch, dass jeweils für zwei Fülleinrichtungen 4 nur eine schaltbare Steuereinrichtung vorgesehen ist, an welche die beiden Fülleinrichtungen 4 angeschlossen sind. Die Verbindung der Fülleinrichtung 4 mit der Steuereinrichtung 5 kann über einen Anschluss 22 erfolgen, wenn die Steuereinrichtung nicht in die Fülleinrichtung 4 integriert ist. Der Anschluss 22 kann Leitungen für Messsignale und Steuerleitungen für Aggregate umfassen.

Jede schaltbare Netzwerkeinrichtung 6, 16, 26 ist hier als Master-Steuereinrichtung 12 ausgebildet, mit welcher die Verfügbarkeit von Datenverbindungen zwischen dieser schaltbaren Steuereinrichtung und den anderen Steuereinrichtungen und/oder der zentralen Anzeigeeinrichtung 15 überprüfbar ist. Möglich und besonders bevorzugt ist es auch, dass ingesamt nur eine Master-Steuereinrichtung 12 vorgesehen ist, mit welcher die Datenverbindung zu den einzelnen Steuereinrichtungen 5 oder Netzwerkeinheiten 32 überprüfbar ist.

Grundsätzlich weist jede schaltbare Steuereinrichtung 6, 16 und 26 bzw. deren Netzwerkeinheit 32 jeweils mindestens eine Schalteinrichtung 9 auf, mit der wenigstens ein Port der schaltbaren Steuereinrichtung zu- und/oder abschaltbar ist. Durch Abschalten z. B. des ersten Ports 7 wird eine Datenverbindung zwischen dem ersten Port 7 und dem zweiten Port 8 der jeweiligen schaltbaren Steuereinrichtung 6, 16 und 26 wahlweise getrennt.

Hier wird eine schaltbare Steuereinrichtung 6, 16, 26 als ausgewählte Steuereinrichtung 11 bestimmt. Das ist hier im Ausführungsbeispiel zunächst die schaltbare Steuereinrichtung 6, die zuerst als ausgewählte Steuereinrichtung 11 dient.

Bei dieser schaltbaren Steuereinrichtung 6 wird die Schalteinrichtung 9 so eingestellt, dass der zweite Port 8 abgeschaltet ist. Dadurch wird insbesondere auch die Datenverbindung zwischen dem ersten Port 7 und dem zweiten Port 8 der schaltbaren Steuereinrichtung 6 unterbrochen. Das führt dazu, dass die insgesamt als Ringstruktur 10 ausgebildete Netzwerkverbindung für Datenverbindungen doch nur eine Linearstruktur 23 aufweist, da der Ring für den Netzwerkverkehr an der schaltbaren Steuereinrichtung 6 zwischen dem ersten Port 7 und dem zweiten Port 8 physikalisch und/oder logisch getrennt ist. Dort liegt eine Trennstelle 27 vor.

In Betrieb kann über die Pfeile zwischen der ersten schaltbaren Steuereinrichtung 6 und der zweiten schaltbaren Steuereinrichtung 16 und der dritten schaltbaren Steuereinrichtung 26 Datenverkehr erfolgen, sodass sich alle einzelnen Fülleinrichtungen 4 untereinander und hier auch mit der zentralen Steuereinrichtung oder auch Verarbeitungseinrichtung oder Anzeigeeinrichtung 15 verständigen können.

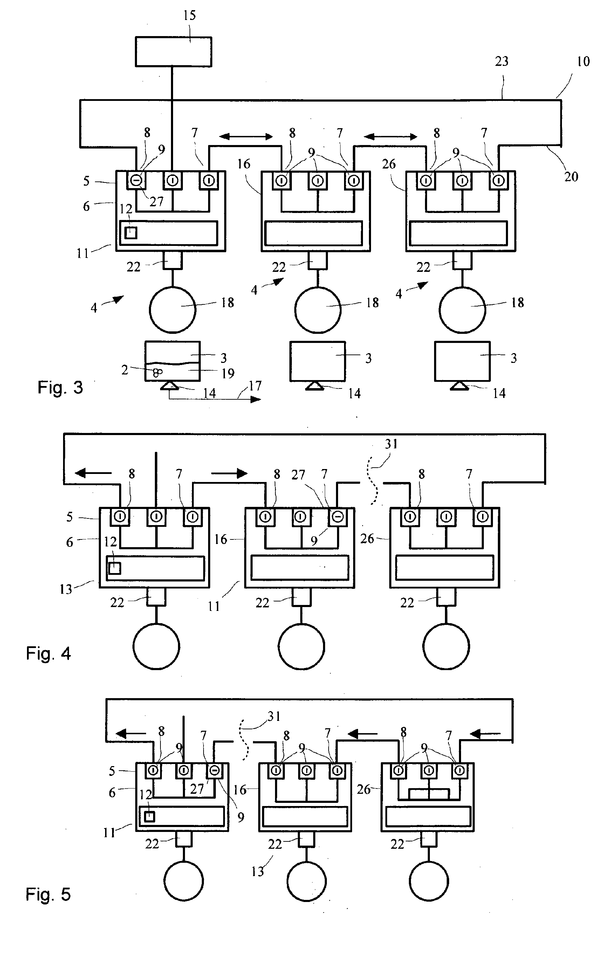

Fig. 3 zeigt eine besonders bevorzugte Variante, bei der in den Steuereinrichtungen 5 die Steuereinheiten 33 und die Netzwerkeinheiten 32 integrale Bestandteile sind. Die Steuereinrichtungen 5 können als integrierte Schaltkreise ausgeführt sein und die Steuereinheiten 33 und die Netzwerkeinheiten 32 können untrennbarer Bestandteil sein.

Auch in Figur 3 sind nur drei schaltbare Steuereinrichtungen 6, 16 und 26 dargestellt, obwohl die Füllmaschine nach Figur 1 über insgesamt sechs Fülleinrichtungen 4 verfügt. Die Anzahl der Steuereinrichtungen richtet sich nach der Anzahl der Fülleinrichtungen 4. Gleiche Bauteile und Komponenten sind in Figur 2 und 3 gleich bezeichnet, sodass hier im Wesentlichen nur die Unterschiede erläutert werden.

Auch hier ist wenigstens eine schaltbare Steuereinrichtung vorgesehen, die einen geschlossenen Ring verhindern kann und welche die Ringstruktur 10 an einer Stelle bedarfsweise trennt oder wieder herstellt.

Bei dem Beispiel nach Fig. 3 ist insgesamt nur eine schaltbare Netzwerkeinrichtung 6 als Master-Steuereinrichtung 12 ausgebildet. Mit der Master-Steuereinrichtung 12 ist die Verfügbarkeit von Datenverbindungen zwischen dieser schaltbaren Steuereinrichtung und den anderen Steuereinrichtungen und/oder der zentralen Anzeigeeinrichtung 15 überprüfbar.

Hier weist jede schaltbare Steuereinrichtung 6, 16 und 26 bzw. deren integrierte Netzwerkeinheit 32 jeweils mindestens eine Schalteinrichtung 9 auf, mit der wenigstens ein Port der schaltbaren Steuereinrichtung zu- und/oder abschaltbar ist. Durch Abschalten z. B. des ersten Ports 7 wird eine Datenverbindung zwischen dem ersten Port 7 und dem zweiten Port 8 der jeweiligen schaltbaren Steuereinrichtung 6, 16 und 26 wahlweise getrennt.

Die Master-Steuereinrichtung 12 bestimmt eine schaltbare Steuereinrichtung 6, 16, 26 als ausgewählte Steuereinrichtung 11. Das ist hier im Ausführungsbeispiel zunächst die schaltbare Steuereinrichtung 6, also die Master-Steuereinrichtung 12 selbst.

Bei der Master-Steuereinrichtung 12 wird die Schalteinrichtung 9 so eingestellt, dass der zweite Port 8 abgeschaltet ist. Dadurch wird insbesondere auch die Datenverbindung zwischen dem ersten Port 7 und dem zweiten Port 8 der schaltbaren Steuereinrichtung 6 unterbrochen. Das führt dazu, dass die insgesamt als Ringstruktur 10 ausgebildete Netzwerkverbindung für Datenverbindungen doch nur eine Linearstruktur 23 aufweist, da der Ring für den Netzwerkverkehr an der schaltbaren Steuereinrichtung 6 zwischen dem ersten Port 7 und dem zweiten Port 8 physikalisch und/oder logisch getrennt ist. Dort liegt eine Trennstelle 27 vor.

In Betrieb kann über die Pfeile zwischen der ersten schaltbaren Steuereinrichtung 6 und der zweiten schaltbaren Steuereinrichtung 16 und der dritten schaltbaren Steuereinrichtung 26 Datenverkehr erfolgen, sodass sich alle einzelnen Fülleinrichtungen 4 untereinander und hier auch mit der zentralen Steuereinrichtung oder auch Verarbeitungseinrichtung oder Anzeigeeinrichtung 15 verständigen können.

Die Master-Steuereinrichtung 12 überprüft vorzugsweise in regelmäßigen Abständen oder bei Bedarf oder bei bestimmten Anlässen (Start der Füllmaschine, Produktwechsel, Wartungsintervall) die Erreichbarkeit der anderen Steuereinrichtungen 16 und 26 (etc.). Vor der Durchführung der Prüfung wird ein eventuell an einer anderen Steuereinrichtung 16, 26 abgeschalteter Port wieder zugeschaltet. Gleichzeitig wird der Port der Master-Steuereinrichtung 12 abgeschaltet, von dem aus die Prüfung nicht stattfindet (z. B. Port 8). Danach wird die Erreichbarkeit der anderen Steuereinrichtungen (hier 16, 26) ausgehend von dem ersten Port 7 der Master-Steuereinrichtung 12 geprüft und es werden die erreichbaren Steuereinrichtungen gezählt und/oder bestimmt. Danach erfolgt die gleiche Prozedur von dem anderen Port der Master-Steuereinrichtung 12 aus. Es wird also zunächst der Port der Master-Steuereinrichtung 12 abgeschaltet, von dem aus die Prüfung nun nicht stattfindet (z. B. Port 7). Danach wird die Erreichbarkeit der anderen Steuereinrichtungen (hier 26, 16) ausgehend von dem zweiten Port 8 der Master-Steuereinrichtung 12 geprüft und es werden die nun erreichbaren Steuereinrichtungen gezählt und/oder bestimmt. Durch Vergleich der Ergebnisse kann auf einen Defekt und die Art eines Defektes rückgeschlossen werden.

Ein erheblicher Vorteil der erfindungsgemäßen Füllmaschine 1 in allen Varianten ist, dass jeweils nur ein Netzwerkkabel von einer Fülleinrichtung 4 zur nächsten Fülleinrichtung 4 gelegt zu werden braucht. Es ist nicht nötig, von der zentralen Verarbeitungseinrichtung 15 zu jeder einzelnen Fülleinrichtung 4 ein separates Netzwerkkabel zu verlegen. Die Steuereinrichtungen 6, 16 und 26 enthalten als schaltbare Switche ausgeführten Netzwerkeinheiten 32 und koppeln das von einem Netzwerkkabel empfangene Signal auf das Netzwerkkabel zu der Netzwerkeinheit 32 der nächsten Steuereinrichtung 6, 16, 26, sodass sich auch mit einer Ethernetverkabelung, die bei modernen Netzwerken keine Ringtopologie erlaubt, praktisch eine Lineartopologie ergibt. Die Ringstruktur 10 weist eine Trennstelle 27 auf.

Falls nun an einer der Fülleinrichtungen 4 ein Defekt auftritt oder falls eine der Fülleinrichtungen 4 einer Wartung unterzogen werden muss, so kann eine Fülleinrichtung 4 oder die zugehörige Steuereinrichtung 5 entfernt werden. Dabei tritt eine Unterbrechung der Datenverbindung zwischen den einzelnen Steuereinrichtungen 4 auf.

Würde beispielsweise die Datenverbindung so unterbrochen, wie es mit der gestrichelten Linie 31 in Figur 4 dargestellt ist, so würde die dritte schaltbare Steuereinrichtung 26 von der zentralen Anzeigeeinrichtung oder Steuereinrichtung 15 und den anderen Fülleinrichtungen 4 abgeschnitten werden, wenn denn die Schalteinrichtung 9 der schaltbaren Steuereinrichtung 6 die in Figur 2 oder in Figur 3 dargestellte Stellung noch aufweisen würde.

Bei regelmäßigen Überprüfungen durch die Master-Steuereinrichtung 12 wird im Betrieb festgestellt, dass an der Störstelle 31 eine Unterbrechung des Datenverkehrs vorliegt, denn die schaltbare Steuereinrichtung 26 kann von der Master-Steuereinrichtung 12 den anderen schaltbaren Steuereinrichtungen 6 und 16 und von der zentralen Verarbeitungseinrichtung 15 aus nicht mehr erreicht werden, solange der Port 8 der schaltbaren Steuereinrichtung 6 abgeschaltet bleibt. Nach der Detektion eines solchen Defekts oder einer solchen Nicht-Erreichbarkeit wird die vorherige ausgewählte Schalteinrichtung 13, nämlich hier die schaltbare Steuereinrichtung 6 umgeschaltet. Dazu wird der abgeschaltete Port 8 wieder zugeschaltet. Dadurch wird an der schaltbaren Steuereinrichtung 6 der erste Port 7 wieder mit dem zweiten Port 8 verbunden. Es kann über den zweiten Port 8 in Richtung des Pfeils eine Netzwerkverbindung zu der schaltbaren Steuereinrichtung 26 aufgebaut werden, obwohl die Datenverbindung an der Störstelle 31 unterbrochen ist. Es stellt nun nämlich der zweite Port 8 der schaltbaren Steuereinrichtung 6 eine Datenverbindung zu der dritten schaltbaren Steuereinrichtung 26 zur Verfügung. Dieser Zustand ist in Fig. 4 dargestellt.

Wenn die Störstelle 31 behoben wird, könnte eine durchgehende Ringstruktur entstehen, die zur Kollision und zur Anhäufung von Netzwerkpaketen führen könnte. Deshalb wird durch die Master-Steuereinrichtung 12 eine neue schaltbare Steuereinrichtung 16 ausgewählt. Bei der neu ausgewählten Steuereinrichtung 16 wird mit der Schalteinrichtung 9 hier der erste Port 7 abgeschaltet. Dadurch wird auch nach Behebung der Störstelle 31 ein zuverlässiger Weiterbetrieb gewährleistet, da eine definierte Trennstelle 27 vorliegt.

Figur 5 zeigt ein Schaltbild, bei dem die Störstelle 31 zwischen der ersten schaltbaren Steuereinrichtung 6 und der zweiten schaltbaren Steuereinrichtung 16 vorgesehen ist. Die Störstelle 31 unterbricht hier den direkten Netzwerkverkehr zwischen der ersten schaltbaren Steuereinrichtung 6 und der zweiten schaltbaren Steuereinrichtung 16. In diesem Zustand kann wieder die erste schaltbare Steuereinrichtung 6 von der Master-Steuereinrichtung 12 als ausgewählte Steuereinrichtung bestimmt werden.

Der erste Port 7 der zweiten schaltbaren Steuereinrichtung 16 wird wieder zugeschaltet. Danach sind alle Steuereinrichtungen und somit alle Fülleinrichtungen 4 wieder miteinander verbunden. Zuvor wird der erste Port 7 der ersten schaltbaren Steuereinrichtung 6 abgeschaltet.

Insgesamt erlaubt die Erfindung einen einfachen Aufbau und einen robusten und zuverlässigen Betrieb einer erfindungsgemäßen Füllmaschine. Dadurch, dass nur noch ein Netzwerkkabel entlang des Umfangs einer z. B. rotierenden Füllmaschine gelegt werden muss, kann erheblicher Bauraum eingespart werden. Auch Montagezeit wird eingespart. Selbst bei Defekt oder Ausfall oder Wartung einer Fülleinrichtung kann ein Weiterbetrieb gewährleistet werden, in dem eine andere schaltbare Steuereinrichtung zur Trennung der Ringstruktur 10 ausgewählt wird. Dadurch kann auch nach Wiederherstellung aller Datenverbindungen ein reibungsloser Weiterbetrieb gewährleistet werden. Ebenso wird eine Störung sicher erkannt und lokalisiert, was die Wartungszeit und den Aufwand drastisch reduziert, wobei die Füllmaschine bis zur Wartung automatisch weiter betrieben werden kann.

**Bezugszeichenliste:**

| | | | |
|---|---|---|---|
| 1 | Füllmaschine | | Verarbeitungseinrichtung |
| 2 | Produkt | 16 | schaltbare |
| 3 | Behälter | | Steuereinrichtung |
| 4 | Fülleinrichtung | 17 | Abschaltsignal |
| 5 | Steuereinrichtung | 18 | Füllorgan |
| 6 | schaltbare | 19 | Abfüllgewicht |
| | Steuereinrichtung | 20 | Datenleitung |
| 7 | erster Port | 21 | Vorrat, Silo |
| 8 | zweiter Port | 22 | Anschluss |
| 9 | Schalteinrichtung | 23 | Linearstruktur |
| 10 | Ringstruktur | 24 | Aufsteckeinrichtung |
| 11 | ausgewählte | 25 | Austrageeinrichtung |
| | Steuereinrichtung | 26 | schaltbare |
| 12 | Master-Steuereinrichtung | | Steuereinrichtung |
| 13 | vorherige ausgewählte | 27 | Trennstelle |
| | Steuereinrichtung | 28 | Netzwerkleitungen |
| 14 | Wägeeinrichtung, | 31 | Störstelle |
| | Dosiereinrichtung | 32 | Netzwerkeinheit |
| 15 | Anzeige- und | 33 | Steuereinheit |

## Patentansprüche

1. Füllmaschine (1) zum Abfüllen von Produkten (2) in Behälter (3) mit wenigstens einer Vielzahl von Fülleinrichtungen (4) mit jeweils wenigstens einem steuerbaren Füllorgan (18) und wenigstens einer Mehrzahl von Steuereinrichtungen (5), wobei jeder Fülleinrichtung (4) eine Steuereinrichtung (5) zum Steuern des Füllprozesses mit dem Füllorgan (18) zugeordnet ist, und wobei jede Fülleinrichtung (4) der Vielzahl von Fülleinrichtungen (4) mit wenigstens einer Steuereinrichtung (5) verbunden ist,
**dadurch gekennzeichnet,**
**dass** die Mehrzahl der Steuereinrichtungen (5) aus wenigstens drei Steuereinrichtungen (5) besteht, die jeweils wenigstens zwei Ports bzw. Netzwerkanschlüsse (7, 8) umfassen und zu einer Ringstruktur (10) verbunden sind, wobei von der Mehrzahl der Steuereinrichtungen (5) wenigstens eine Steuereinrichtung (6, 16, 26) als schaltbare Steuereinrichtung (6, 16, 26) ausgeführt ist und wenigstens einen zuschaltbaren und abschaltbaren Port (7, 8) umfasst, um die Ringstruktur (10) gezielt zu unterbrechen.

2. Füllmaschine nach Anspruch 1, wobei wenigstens zwei schaltbare Steuereinrichtungen (6, 16, 26) mit schaltbaren Ports (7, 8) vorgesehen sind.

3. Füllmaschine nach einem der vorhergehenden Ansprüche, wobei von wenigstens einer schaltbaren Steuereinrichtung (11) wenigstens zwei Ports (7, 8) separat zu- und abschaltbar sind.

4. Füllmaschine nach einem der vorhergehenden Ansprüche, wobei wenigstens ein Port wenigstens einer schaltbaren Steuereinrichtung eine Schalteinrichtung aufweist.

5. Füllmaschine (1) nach einem der vorhergehenden Ansprüche, wobei eine Steuereinrichtung der Mehrzahl der Steuereinrichtungen eine Master-Steuereinrichtung (12) ist und wobei mit der Master-Steuereinrichtung (12) eine Datenverbindung (20) zu den Steuereinrichtungen (6, 16, 26) prüfbar ist, wobei die Master-Steuereinrichtung insbesondere über einen weiteren Port mit einer zentralen Verarbeitungseinrichtung verbunden ist.

6. Füllmaschine (1) nach einem der vorhergehenden Ansprüche, wobei eine schaltbare Steuereinrichtung als ausgewählte Steuereinrichtung (11) bestimmt wird, an der wenigstens ein Port abgeschaltet wird.

7. Füllmaschine (1) nach einem der vorhergehenden Ansprüche, wobei die Master-Steuereinrichtung (12) geeignet ist, die ausgewählte Steuereinrichtung (11) zu einer vorherigen ausgewählten Steuereinrichtung (13) zu deklarieren und/oder eine andere schaltbare Steuereinrichtung (16, 26) zu der ausgewählten Steuereinrichtung (11) zu deklarieren, wenn die Datenverbindung zu einer der Steuereinrichtungen (6, 16, 26) nicht erfolgreich war
und/oder wobei die Master-Steuereinrichtung (12) geeignet ist, die Schalteinrichtung (9) der ausgewählten Steuereinrichtung (11) derart umzuschalten, dass an der der ausgewählten Steuereinrichtung (11) wenigstens ein Port (7, 8) abgeschaltet ist
und/oder wobei die Master-Steuereinrichtung (12) geeignet ist, die Schalteinrichtung (9) der vorherigen ausgewählten Steuereinrichtung (13) derart umzuschalten, dass der abgeschaltete Port (7, 8) an der vorherigen ausgewählten Steuereinrichtung (13) wieder zugeschaltet wird, sodass dort eine Datenverbindung zwischen dem ersten Port (7) und dem zweiten Port (8) vorliegt.

8. Füllmaschine (1) nach einem der vorhergehenden Ansprüche, wobei wenigstens zwei Fülleinrichtungen (4) mit einer Steuereinrichtung (5) verbunden sind und/oder wobei jeder Fülleinrichtung (4) eine Wägeeinrichtung (14) und/oder eine Dosiereinrichtung (14) zugeordnet ist.

9. Füllmaschine (1) nach einem der vorhergehenden Ansprüche, wobei die Steuereinrichtung ein Abschaltsignal (17) an ein Füllorgan (18) ausgibt, wenn das vorgesehene Abfüllgewicht (19) mit der Wägeeinrichtung (14) ermittelt wird.

10. Füllmaschine (1) nach einem der vorhergehenden Ansprüche, wobei wenigstens eine Steuereinrichtung eine Steuereinheit zur Steuerung und eine damit verbundene Netzwerkeinheit umfasst, wobei an der Netzwerkeinheit die wenigstens zwei Ports vorgesehen sind.

11. Verfahren zum Betreiben einer Füllmaschine (1) zum Abfüllen von Produkten (2) in Behälter (3), wobei die Füllmaschine (1) wenigstens eine Vielzahl von Fülleinrichtungen (4) mit jeweils wenigstens einem steuerbaren Füllorgan (18) und wenigstens eine Mehrzahl von Steuereinrichtungen (5) aufweist, wobei jeder Fülleinrichtung (4) der Vielzahl von Fülleinrichtungen (4) eine Steuereinrichtung (5) zum Steuern des Füllprozesses mit dem Füllorgan (18) zugeordnet ist und wobei jede Fülleinrichtung (4) mit wenigstens einer Steuereinrichtung (5) verbunden ist, um die Fülleinrichtungen (4) und insbesondere das Abfüllen der Produkte (2) in Behälter (3) zu steuern,
**dadurch gekennzeichnet,**
**dass** die Mehrzahl der Netzwerkeinrichtungen (5) wenigstens drei Netzwerkeinrichtungen (5) umfasst, von denen wenigstens eine Netzwerkeinrichtung als schaltbare Netzwerkeinrichtung (6, 16, 26) ausgeführt ist, wobei jede Netzwerkeinrichtung (5) wenigstens zwei Ports bzw. Netzwerkanschlüsse (7, 8) umfasst, und wobei bei der wenigstens einen schaltbaren Netzwerkeinrichtung (6, 16, 26) wenigstens ein Port zu- und abschaltbar ist,
und **dass** die Mehrzahl der Steuereinrichtungen (5) aus wenigstens drei Steuereinrichtungen (5) besteht und über die jeweils wenigstens zwei Ports (7, 8) zu einer Ringstruktur (10) verbunden sind, und dass ein schaltbarer Port (7, 8) zugeschaltet und abgeschaltet wird, um die Ringstruktur (10) gezielt zu unterbrechen.

12. Verfahren nach dem vorhergehenden Anspruch, wobei von einer Steuereinrichtung aus über zunächst den einen und dann den anderen Port periodisch versucht wird, die anderen Steuereinrichtungen zu erreichen, um einen Defekt zu erkennen und wobei insbesondere bei Erkennung eines Defektes der abgeschaltete Port wieder zugeschaltet wird.

13. Verfahren nach dem vorhergehenden Anspruch, wobei eine Datenverbindung (20) zu den Steuereinrichtungen (6, 16, 26) geprüft wird und/oder wobei eine schaltbare Steuereinrichtung als ausgewählte Steuereinrichtung (11) bestimmt wird.

14. Verfahren nach dem vorhergehenden Anspruch, wobei die ausgewählte Steuereinrichtung als vorherige ausgewählte Steuereinrichtung (13) gekennzeichnet wird und eine neue ausgewählte Steuereinrichtung (11) bestimmt wird, wenn die Datenverbindung zu einer schaltbaren Steuereinrichtung (6, 16, 26) nicht erfolgreich war und/oder wobei als die ausgewählte Steuereinrichtung (11) die schaltbare Steuereinrichtung (16) bestimmt wird, die benachbart zu der Steuereinrichtung angeordnet ist, zu der die Datenverbindung nicht erfolgreich war und wobei insbesondere ein Port dieser Steuereinrichtung abgeschaltet wird, und wobei vorzugsweise der Port abgeschaltet wird, der einer Störstelle zugewandt ist.

15. Verfahren nach einem der beiden vorhergehenden Ansprüche, wobei bei der vorherigen ausgewählten Steuereinrichtung (13) die Schalteinrichtung (9) einen abgeschalteten Port (7, 8) wieder zuschaltet, sodass eine Verbindung zwischen dem ersten und dem zweiten Port (7, 8) hergestellt wird.

## Claims

1. Filling machine (1) for filling product (2) into containers (3) comprising at least a plurality of filling devices (4) each having at least one controlled filling element (18) and at least a plurality of control devices (5), wherein each of the filling devices (4) has an assigned control device (5) for controlling the filling process by means of the filling element (18), and wherein each filling device (4) of the plurality of filling devices (4) is connected with at least one control device (5),
**characterized in**
**that** the plurality of control devices (5) consists of at least three control devices (5) each comprising at least two ports respectively network access points (7, 8) and connected to form a ring structure (10), wherein at least one control device (6, 16, 26) of the plurality of control devices (5) is configured as a switched control device (6, 16, 26) and comprises at least one port (7, 8) that can be connected and disconnected for controlled interrupts of the ring structure (10).

2. The filling machine of claim 1 wherein at least two switched control devices (6, 16, 26) having switched ports (7, 8) are provided.

3. The filling machine according to any of the preceding claims wherein at least two ports (7, 8) of at least one switched control device (11) can be separately connected and disconnected.

4. The filling machine according to any of the preceding claims wherein at least one port of at least one switched control device comprises a switching device.

5. The filling machine (1) according to any of the preceding claims wherein a control device of the plurality of control devices is a master control device (12) and wherein the master control device (12) allows to test a data link (20) with the control devices (6, 16, 26), wherein the master control device is connected with a central processing device in particular via another port.

6. The filling machine (1) according to any of the preceding claims wherein a switched control device is determined to be the selected control device (11) at which at least one port is disconnected.

7. The filling machine (1) according to any of the preceding claims wherein the master control device (12) is suitable to declare the selected control device (11) to be a previously selected control device (13) and/or to declare another switched control device (16, 26) to be the selected control device (11) if the data link with any of the control devices (6, 16, 26) has not been successful
and/or wherein the master control device (12) is suitable to switch over the switching device (9) of the selected control device (11) so that at least one port (7, 8) of the selected control device (11) is disconnected
and/or wherein the master control device (12) is suitable to switch over the switching device (9) of the previously selected control device (13) so that the disconnected port (7, 8) of the previously selected control device (13) is reconnected so as to provide it with a data link between the first port (7) and the second port (8).

8. The filling machine (1) according to any of the preceding claims wherein at least two filling devices (4) are connected with one control device (5) and/or wherein a weighing device (14) and/or a batching device (14) is assigned to each filling device (4).

9. The filling machine (1) according to any of the preceding claims wherein the control device emits a switch-off signal (17) to a filling element (18) as the weighing device (14) obtains the intended filled weight (19).

10. The filling machine (1) according to any of the preceding claims wherein at least one control device comprises a control unit for controlling and a network unit connected therewith wherein the network unit is provided with the at least two ports.

11. Method for operating a filling machine (1) for filling product (2) into containers (3), the filling machine (1) comprising at least a plurality of filling devices (4) each having at least one controlled filling element (18) and at least a plurality of control devices (5), wherein each filling device (4) of the plurality of filling devices (4) has an assigned control device (5) for controlling the filling process by means of the filling element (18), and wherein each filling device (4) is connected with at least one control device (5) for controlling the filling devices (4) and in particular the filling of product (2) into containers (3),
**characterized in**
**that** the plurality of network devices (5) comprises at least three network devices (5) at least one of which network devices being configured as a switched network device (6, 16, 26) wherein each network device (5) comprises at least two ports respectively network access points (7, 8), and wherein at least one port can be connected and disconnected with the at least one switched network device (6, 16, 26),
and **that** the plurality of control devices (5) consists of at least three control devices (5) by means of which at least two ports (7, 8) are connected to form a ring structure (10), and that a switched port (7, 8) is connected and disconnected for controlled interrupts of the ring structure (10).

12. The method according to the preceding claim wherein a control device periodically attempts to access the other control devices first via the one and then via the other port for detecting a fault and wherein the disconnected port is reconnected in particular if a fault is detected.

13. The method according to the preceding claim wherein a data link (20) with the control devices (6, 16, 26) is tested and/or wherein a switched control device is specified to be the selected control device (11).

14. The method according to the preceding claim wherein the selected control device is marked as the previously selected control device (13) and a new, selected control device (11) is specified if the data link with a switched control device (6, 16, 26) has not been successful and/or wherein the switched control device (16) located adjacent to the control device the data link with which has not been successful is specified as the selected control device (11) and wherein in particular a port of this control device is disconnected, and wherein preferably the port facing a line fault is disconnected.

15. The method according to any of the two preceding claims wherein the switching device (9) reconnects a disconnected port (7, 8) to the previously selected control device (13) so as to establish a connection between the first and second ports (7, 8).

## Revendications

1. Machine de remplissage (1) destinée à mettre des produits (2) dans des récipients (3), comprenant au moins une pluralité de dispositifs de remplissage (4) ayant chacun au moins un organe de remplissage (18) commandable et au moins une pluralité de dispositifs de commande (5), dans laquelle un dispositif de commande (5) est associé à chaque dispositif de remplissage (4) pour commander le processus de remplissage avec l'organe de remplissage (18), et dans laquelle chaque dispositif de remplissage (4) de ladite pluralité de dispositifs de remplissage (4) est relié à au moins un dispositif de commande (5),
**caractérisée par le fait que** ladite pluralité des dispositifs de commande (5) se compose d'au moins trois dispositifs de commande (5) qui comprennent chacun au moins deux ports ou bien raccordements de réseau (7, 8) et sont reliés pour former une structure annulaire (10), au moins un dispositif de commande (6, 16, 26) de ladite pluralité des dispositifs de commande (5) étant réalisé en tant que dispositif de commande (6, 16, 26) commutable et comprenant au moins un port (7, 8) apte à être raccordé et déconnecté afin d'interrompre d'une manière ciblée la structure annulaire (10).

2. Machine de remplissage (1) selon la revendication 1, dans laquelle au moins deux dispositifs de commande (6, 16, 26) commutables ayant des ports (7, 8) commutables sont prévus.

3. Machine de remplissage selon l'une quelconque des revendications précédentes, dans laquelle au moins deux ports (7, 8) d'au moins un dispositif de commande (11) commutable peuvent être raccordés et déconnectés séparément.

4. Machine de remplissage selon l'une quelconque des revendications précédentes, dans laquelle au moins un port d'au moins un dispositif de commande commutable présente un dispositif de commutation.

5. Machine de remplissage (1) selon l'une quelconque des revendications précédentes, dans laquelle un dispositif de commande de ladite pluralité des dispositifs de commande est un dispositif de commande maître (12) et dans laquelle on peut contrôler au moyen du dispositif de commande maître (12) une liaison de données (20) vers les dispositifs de commande (6, 16, 26), ledit dispositif de commande maître étant relié en particulier via un autre port à un dispositif de traitement central.

6. Machine de remplissage (1) selon l'une quelconque des revendications précédentes, dans laquelle un dispositif de commande commutable est déterminé comme dispositif de commande choisi (11) sur lequel au moins un port est déconnecté.

7. Machine de remplissage (1) selon l'une quelconque des revendications précédentes, dans laquelle ledit dispositif de commande maître (12) est apte à déclarer le dispositif de commande choisi (11) comme étant un dispositif de commande choisi précédent (13) et/ou à déclarer un autre dispositif de commande (16, 26) commutable comme étant le dispositif de commande choisi (11) lorsque la liaison de données vers l'un des dispositifs de commande (6, 16, 26) n'était pas couronnée de succès,
et/ou dans laquelle le dispositif de commande maître (12) est apte à commuter le dispositif de commutation (9) du dispositif de commande choisi (11) de manière à ce qu'au moins un port (7, 8) sur le dispositif de commande choisi (11) soit déconnecté,
et/ou dans laquelle le dispositif de commande maître (12) est apte à commuter le dispositif de commutation (9) du dispositif de commande choisi précédent (13) de manière à ce que le port (7, 8) déconnecté sur le dispositif de commande choisi précédent (13) soit à nouveau raccordé de sorte qu'il y existe une liaison de données entre le premier port (7) et le deuxième port (8).

8. Machine de remplissage (1) selon l'une quelconque des revendications précédentes, dans laquelle au moins deux dispositifs de remplissage (4) sont reliés à un dispositif de commande (5) et/ou dans laquelle un dispositif de pesée (14) et/ou un dispositif de dosage (14) est associé à chaque dispositif de remplissage (4).

9. Machine de remplissage (1) selon l'une quelconque des revendications précédentes, dans laquelle le dispositif de commande délivre un signal d'interruption (17) à un organe de remplissage (18) lorsque le poids de remplissage (19) prévu est déterminé par le dispositif de pesée (14).

10. Machine de remplissage (1) selon l'une quelconque des revendications précédentes, dans laquelle au moins un dispositif de commande comprend une unité de commande pour la commande ainsi qu'une unité de réseau reliée à celle-ci, lesdits au moins deux ports étant prévus sur ladite unité de réseau.

11. Procédé pour faire fonctionner une machine de remplissage (1) destinée à mettre des produits (2) dans des récipients (3), ladite machine de remplissage (1) comprenant au moins une pluralité de dispositifs de remplissage (4) ayant chacun au moins un organe de remplissage (18) commandable et au moins une pluralité de dispositifs de commande (5), un dispositif de commande (5) étant associé à chaque dispositif de remplissage (4) de la pluralité de dispositifs de remplissage (4) pour commander le processus de remplissage avec l'organe de remplissage (18), et chaque dispositif de remplissage (4) étant relié à au moins un dispositif de commande (5) afin de commander les dispositifs de remplissage (4) et en particulier l'action de mettre les produits (2) dans des récipients (3),
**caractérisé par le fait que** la pluralité des dispositifs de réseau (5) comprend au moins trois dispositifs de réseau (5) dont au moins un dispositif de réseau est réalisé en tant que dispositif de réseau (6, 16, 26) commutable, chaque dispositif de réseau (5) comprenant au moins deux ports ou bien raccordements de réseau (7, 8) et, dans ledit au moins un dispositif de réseau (6, 16, 26) commutable, un port (7, 8) au moins étant apte à être raccordé et déconnecté,
et que ladite pluralité des dispositifs de commande (5) se compose d'au moins trois dispositifs de commande (5) et est reliée par lesdits respectivement au moins deux ports (7, 8) pour former une structure annulaire (10), et qu'un port (7, 8) commutable est raccordé et déconnecté afin d'interrompre d'une manière ciblée la structure annulaire (10).

12. Procédé selon la revendication précédente, dans lequel on essaie périodiquement, à partir d'un dispositif de commande, d'abord via l'un des ports et puis via l'autre, d'atteindre les autres dispositifs de commande afin de détecter un défaut, et dans lequel, en particulier, lorsqu'un défaut est détecté, le port déconnecté est à nouveau raccordé.

13. Procédé selon la revendication précédente, dans lequel une liaison de données (20) vers les dispositifs de commande (6, 16, 26) est contrôlée et/ou dans lequel un dispositif de commande commutable est déterminé comme dispositif de commande choisi (11).

14. Procédé selon la revendication précédente, dans lequel le dispositif de commande choisi est signalé comme étant le dispositif de commande choisi précédent (13) et un nouveau dispositif de commande choisi (11) est déterminé lorsque la liaison de données vers un dispositif de commande (6, 16, 26) commutable n'était pas couronnée de succès, et/ou dans lequel on détermine, en tant que dispositif de commande choisi (11), le dispositif de commande (16) commutable qui est voisin du dispositif de commande vers lequel la liaison de données n'était pas couronnée de succès, et dans lequel, en particulier, un port de ce dispositif de commande est déconnecté, et dans lequel, de préférence, on déconnecte le port qui montre vers un point de défaut.

15. Procédé selon l'une quelconque des deux revendications précédentes, dans lequel, dans le dispositif de commande choisi précédent (13), le dispositif de commutation (9) raccorde à nouveau un port (7, 8) déconnecté de sorte qu'une liaison entre les premier et deuxième ports (7, 8) est établie.
